Europäisches Patentamt

European Patent Office

Office européen des brevets

(19)

(11) Publication number: **0 418 437 A1**

## EUROPEAN PATENT APPLICATION

(12)

(21) Application number: 89309516.6

(22) Date of filing: 19.09.89

(51) Int. Cl.5: **B23B 51/04**

(43) Date of publication of application:
27.03.91 Bulletin 91/13

(84) Designated Contracting States:
AT BE CH DE ES FR GR IT LI LU NL SE

(71) Applicant: **J.FISHER & CO. (CLEVELEYS) LTD.**
**Dorset Avenue**
**Cleveleys Lancashire FY5 2DF(GB)**

(72) Inventor: **Willetts, Roy**
**37 Westwood Avenue**
**Blackpool Lancashire, FY3 9EB(GB)**

(74) Representative: **Knowles, Audrey Elizabeth**
**624 Pershore Road**
**Selly Park Birmingham B29 7HG(GB)**

(54) **Boring tool.**

(57) A boring tool (1) comprises a tool head (2) and a tool insert (3) detachably mounted on the tool head (2) by a screw (5) arranged to extend through a bore (11) in the tool insert (3) and having a head (15) engageable with an offset frusto-conical recess (14) at the outer end of the bore (11) such that, on tightening the screw (5), the tool insert (3) is urged radially against an axial abutment face (17) of the tool head (2) to locate accurately the tool insert (3) on the tool head (2).

FIGURE 2.

EP 0 418 437 A1

This invention relates to boring tools for drilling a hole in a workpiece and in particular, though not exclusively, to a boring tool for deep-hole drilling.

Boring tools for deep-hole drilling include a tool head to which a tool insert having a cutting tip or blade is mounted for drilling a hole of pre-determined diameter.

It is known to detachably mount the tool insert on the tool head both to enable a worn or damaged tool insert to be replaced and to allow different sizes of tool inserts to be mounted on the same tool head for drilling holes of different diameters.

To maintain the alignment of the tool head in the hole being drilled, the tool head is provided with two support pads arranged at approximately 90° and 180° with respect to the tool insert. These support pads are chosen to match the size of the tool insert and, where the tool insert is detachable, the support pads are also detachable both to enable worn or damaged support pads to be replaced and to allow the support pads to be changed to match different sizes of tool inserts.

To cool and lubricate the workpiece and cutting tip or blade during drilling and to remove the chips of material removed from the workpiece by the drilling, oil or other suitable coolant fluid is supplied continuously to the drilling region and removed together with the chips through either a central passageway or an external groove formed in the tool head.

The accuracy of the hole formed by the drilling operation is dependent on the initial location of the tool insert on the tool head and the avoidance of any movement of the tool insert relative to the tool head during the drilling operation.

The present invention solves the problem of accurately locating the tool insert on the tool head by engagement of a releasable fastener with an eccentric portion of the tool insert arranged such that, on tightening the fastener to secure the tool insert, the tool insert is urged against an abutment face of the tool head.

According to a preferred embodiment of the present invention the fastener has a shank arranged to extend through a bore in the tool insert to engage the tool head and a head received in a frusto-conical recess at the outer end of the bore, the recess being offset relative to the centre longitudinal axis of the bore whereby engagement of the fastener head in the offset recess urges the tool insert in a direction substantially normal to said centre longitudinal axis against the abutment face on the tool head.

By the present invention the tool insert is automatically located against the abutment face of the tool head by the action of tightening the fastener used to secure the tool insert to the tool head. In this way accurate positioning of the tool insert is assured. Furthermore, the abutment face on the tool head provides a reference datum position whereby accuracy of location is assured when fitting tool inserts of the same or different type and size.

The fastener urges the tool insert against the abutment face to prevent lateral movement of the tool insert in a radial direction relative to the tool head and simultaneously secures the tool insert to the tool head to prevent lifting or tilting movement of the tool insert relative to the tool head in a direction parallel to the axis of the fastener.

According to a preferred feature of the invention, the tool head and tool insert are provided with co-operating formations extending normal to the abutment face, for example a rib on one engaging a slot or groove in the other to locate the tool insert against twisting movement relative to the tool head about the axis of the fastener.

Other features and advantages of the invented boring tool will be apparent from the following detailed description of an exemplary embodiment wherein:-

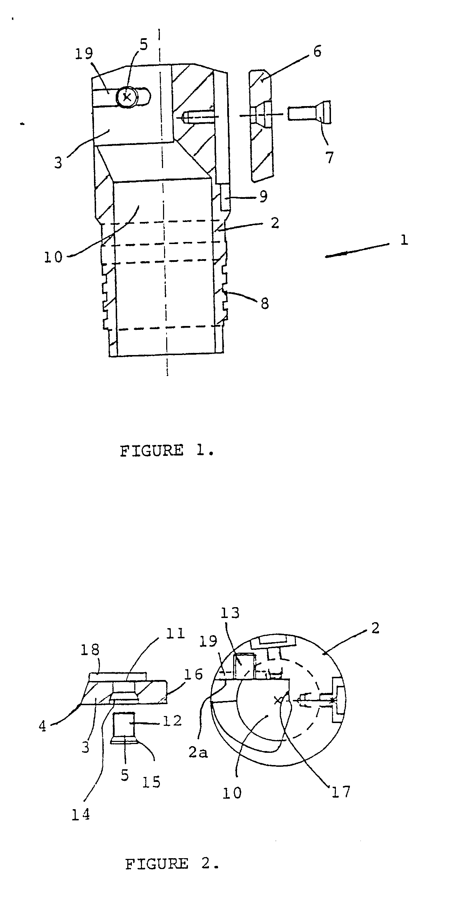

FIGURE 1 is a side view partly in section of a boring tool according to the present invention;

FIGURE 2 is a plan view of the boring tool shown in Figure 1 with the tool insert shown detached from the tool head;

FIGURE 3 is an enlarged detailed section of the bore in the tool insert; and

FIGURES 4, 5 and 6 show diagrammatically the triple locking arrangement of the tool insert in the tool head.

Referring to the accompanying drawings, a boring tool 1 for drilling a hole in a workpiece (not shown) includes a generally cylindrical tool head 2 having a radially disposed support face 2 a at one end to which a tungsten carbide tool insert 3 having a cutting tip or blade 4 is releasably secured by a screw 5.

Two tungsten carbide support pads 6 sized to match the tool insert 3 are releasably secured by screws 7 to the tool head 2 at approximately 90° and 180° with respect to the tool insert 3 for locating and maintaining alignment of the tool head 2 in the hole being drilled.

At the other end the tool head 2 has an external screw thread 8 for detachably mounting the tool head 2 on a machine tool (not shown). To assist fitment and removal, the tool head 2 has two circumferentially spaced spanner slots 9 (one only shown).

The cutting tip 4 is cooled and lubricated in use by oil continuously supplied to the drilling region and removed together with the chips of material cut from the workpiece via central passageway 10 formed in the tool head 2.

The tool insert 3 has a bore 11 through which the screw shank 12 extends to engage a tapped hole 13 in the support face 2 a of the tool head 2 and a frusto-conical recess 14 at the outer end of the bore 11 in which the screw head 15 is received.

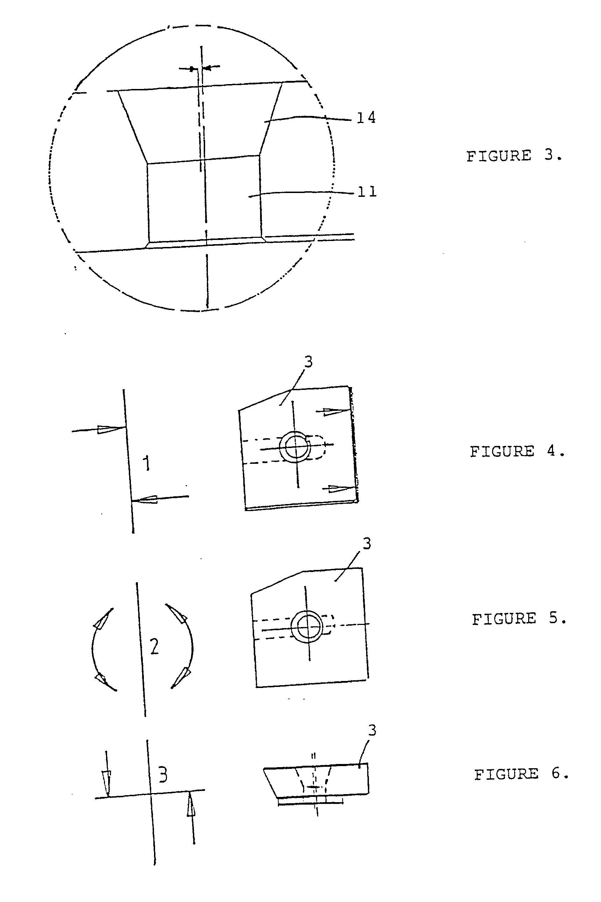

As best shown in Figure 3, the recess 14 is offset relative to the central longitudinal axis A of the bore 11 so that, on tightening the screw 5, the tool insert 3 is urged radially inwardly and the inner end face 16 remote from the cutting tip 4 is automatically located against an axially extending abutment face 17 on the tool head 2.

In addition, the tool insert 3 has a rib 18 on the under side extending perpendicular to the inner end face 16 which is slidably received in a complementary groove 19 formed in the opposed support face 2 a of the tool head 2 so that, on tightening the screw 5, the tool insert 3 is guided and held in the correct orientation relative to the abutment face 17.

As will now be understood, the abutment face 17 on the tool head 2 defines a reference datum position for the tool insert 3 against which the tool insert 3 is automatically located on tightening the screw 5 whilst being guided by the interengagement of the rib 18 and groove 19.

Additionally, as shown in Figures 4 to 6, once secured by the screw 5, the tool insert 3 is effectively locked relative to the tool head 2 against lateral movement in the radial direction (Figure 4), twisting movement about the axis of the screw (Figure 5) and lifting or tilting movement parallel to the axis of the screw (Figure 6).

By accurately locating the tool insert on the tool head and locking the tool insert relative to the tool head as above-described, precision drilling of the hole is ensured in a simple and effective manner which may be repeated for a range of types and sizes of tool inserts fitted to the same tool head with appropriately sized support pads.

The invention is not limited to the embodiment above-described. Thus the tool head may be adapted for mounting on a machine tool by any suitable means, for example an internal screw thread may be provided in place of the external screw thread above-described. similarly, the tool head may be adapted to remove the chips from the drilling region by means of an external groove in the outer surface in place of the central passageway above-described.

The rib and groove for guiding the tool insert and preventing twisting of the tool insert may be reversed so that the rib is on the tool head and the groove in the tool insert and may be of any suitable complementary shape in transverse cross-section.

A plurality of ribs and grooves may be provided of which the ribs may all be on the tool insert and the grooves all on the tool head or vice versa. Alternatively ribs and grooves may be provided on each of the tool insert and tool head.

## Claims

1. A boring tool (1) comprising a tool head (2) and a tool insert (3) having a cutting tip or blade (4) mounted on the tool head (2) characterised in that the tool insert (3) is secured by a releasable fastener (5) having a shank (12) arranged to extend through a bore (11) in the tool insert (3) to engage the tool head (2) and a head (15) received in a frusto-conical recess (14) at the outer end of the bore (11), the recess (14) being offset to the centre longitudinal axis of the bore (11) whereby engagement of the fastener head (15) in the offset recess (14) urges the tool insert (3) in a direction substantially normal to said centre longitudinal axis against an abutment face (17) on the tool head (2).

2. A boring tool according to Claim 1 characterised in that the tool head (2) and tool insert (3) have cooperating formations, such as a groove (19) in one engaged by a rib (18) on the other, for locating the tool insert (3) against rotation relative to the tool head (2) about the axis of the fastener (5).

3. A boring tool according to Claim 1 or Claim 2 characterised in that the tool head (2) is generally cylindrical and the abutment face (17) extends in the axial direction.

4. A boring tool according to Claim 3 characterised in that the tool insert (3) is urged radially inwardly against the abutment face (17).

5. A boring tool according to any one of the preceding Claims characterised in that the tool head (2) has a central passageway (10).

6. A boring tool according to any one of the preceding Claims characterised in that two support pads (6) are releasably secured to the tool head (2) at approximately 90° and 180° with respect to the tool insert (3).

7. A boring tool according to any one of the preceding Claims characterised in that the tool head (2) is adapted for detachably mounting on a machine tool, for example by means of a screw threaded portion (8) remote from the tool insert (3).

8. A boring tool (1) comprising a generally cylindrical tool head (2) having a radially extending support face (2 a ) and a tool insert (3) having a cutting tip or blade (4) mounted on the support face (2 a ) characterised in that the tool insert (3) is secured by a releasable fastener (5) having a shank (12) arranged to extend through a bore (11) in the tool insert (3) to engage the tool head (2) and a head (15) received in an eccentric recess (14) at the outer end of the bore (11) whereby, on tightening the fastener (5), the tool insert (3) is urged against an axially extending abutment face (17) of the tool head (2) by engagement of the fastener head (15) in the recess (14) to locate positively the tool insert (3) in a pre-determined reference datum position.

9. A boring tool according to Claim 8 characterised in that the eccentric recess (14) comprises a frusto-conical countersink (14) offset relative to the centre longitudinal axis of the bore (11).

10. A boring tool according to Claim 8 or Claim 9 characterised in that the fastener (5) comprises a screw (5) having a threaded shank (12) for engagement in a tapped hole (13) in the tool head (2) and a frusto-conical head (15) for engagement in the recess (14).

FIGURE 1.

FIGURE 2.

FIGURE 3.

14

11

FIGURE 4.

3

1

FIGURE 5.

3

2

FIGURE 6.

3

3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 938 231 (HOPKINS) * Column 1, lines 65-68; column 2, lines 3-8,53-61; figure 10 * | 1,8-10 | B 23 B 51/04 |
| A | | 3,4 | |
| A | DE-A-3 405 211 (KIENINGER) * Page 7, lines 3-16; figure 1 * | 2 | |
| A | FR-A- 892 182 (SOCIETE INDUSTRIELLE ET COMMERCIALE DES ACIERS) * Page 2, lines 8-10; figures 1,2,4 * | 1,3,4,6 ,7 | |
| A | DE-C- 848 140 (BEISNER) * Figures 1,3 * | 5-7 | |
| A | FR-A-2 334 456 (MONTANWERKE WALTER) | | |
| A | FR-A-2 311 623 (BOTEK PRAZISIONS-BOHRTECHNIK SCHUR & CO.) | | |
| A | US-A-3 094 016 (KLEINE) | | TECHNICAL FIELDS SEARCHED (Int. Cl.5) B 23 B 51/00 B 23 B 27/00 |

The present search report has been drawn up for all claims

| Place of search | Date of completion of the search | Examiner |
|---|---|---|
| THE HAGUE | 08-05-1990 | BOGAERT F.L. |

EPO FORM 1503 03.82 (P0401)